# FASCICULE DE BREVET EUROPEEN

(11) **EP 0 463 926 B1**
(45) Date de publication et mention de la délivrance du brevet: **02.02.1994**
(21) Numéro de dépôt: 91401625.8
(22) Date de dépôt: 18.06.1991
(51) Int. Cl.: B01J 13/18

(54) **Procédé perfectionné pour la fabrication de microcapsules contenant des liquides hydrophobes, microcapsules et leur utilisation dans les papiers autocopiants**
Verfahren zur Herstellung von Mikrokapseln, welche hydrophobe Flüssigkeiten enthalten, Mikrokapseln und Verwendung derselben in Durchschreibpapieren
Process for preparing microcapsules containing a hydrophobic liquid, microcapsules and their application in carbonless papers

(30) Priorité: 27.06.1990 FR 9008092
(43) Date de publication de la demande: 02.01.1992
(73) Titulaire: CECA S.A., 92800 Puteaux (FR)
(72) Inventeur: Dreyfus, Thierry, F-60140 Villiers sur Coudon (FR); Laurent, Henri, F-60200 Compiegne (FR)
(74) Mandataire: Haicour, Philippe

(56) Documents cités:
- DE-A- 2 019 765
- DATABASE WPI, accession no. 85-041466 [07], Derwent Publications Ltd, Londres,GB;
- Chemical Abstracts 2-1908, p 750

## Description

La présente invention est relative à la fabrication de microcapsules contenant divers liquides organiques hydrophobes.

La microencapsulation est une technique qui consiste à recouvrir d'une enveloppe de fines particules solides, des gouttelettes liquides ou des bulles gazeuses. La microencapsulation des liquides présente le gros intérêt de permettre la manipulation de liquides sous forme de poudres. On distingue la microencapsulation de liquides hydrosolubles qui s'opère à partir d'émulsions du type eau dans l'huile, et la microencapsulation de liquides hydrophobes qui s'opère à partir d'émulsions de type huile dans l'eau. C'est de ces dernières qu'il s'agit dans la présente invention.

La fabrication de microcapsules est connue depuis très longtemps et de nombreux procédés en ont été proposés. Par exemple, le brevet US 2 800 458 décrit un procédé dit de coacervation simple, par lequel on modifie la solubilité du polymère hydrophile qui se sépare sous forme d'un liquide à haute teneur en polymère qui vient se placer à l'interface eau/produit à encapsuler. Il forme la paroi de la capsule et est ensuite durci par une réaction chimique. Un tel polymère peut être la gélatine. On peut obtenir aussi des microcapsules par un procédé de coacervation complexe, par utilisation de deux polymères de charges opposées, par exemple la gélatine et les alginates: le complexe qui se forme ayant une solubilité limitée dans la phase aqueuse entraîne une séparation liquide-liquide. Un tel procédé est décrit dans le brevet US 2 800 457. On a appliqué le même principe avec des polymères synthétiques. Ainsi, le brevet US 3 607 775 décrit l'utilisation de résines urée-formol modifiées par des amines, des résines polyamides-épichlorhydrine, des copolymères polyacrylamide-polyacide acrylique comme polymère hydrophile chargé positivement et un polymère filmogène chargé négativement comme la gomme arabique ou de la gélatine. Dans la demande de brevet japonais JP 58 33492 du 26.02.1983, on décrit un procédé de coacervation complexe d'une résine mélamine-formol avec une résine urée-formol cationique en présence de tensioactif anionique; il y est dit qu'en milieu acide une coacervation complexe apparaît et que les prépolymères sont ensuite réticulés. Cependant, ces procédés ne sont pas tout-à-fait satisfaisants. Lorsqu'on utilise des gélatines, les microcapsules ont tendance à s'agglomérer lors de la réticulation et à former des agrégats de taille importante. D'autre part, au cours de la réticulation des polymères, les propriétés tensioactives de ceux-ci varient et on obtient des répartitions de granulométrie très larges. Le brevet US 3 516 941 décrit l'utilisation de résines aminoplastes pour la fabrication de microcapsules par simple condensation à la surface d'une émulsion d'un liquide non miscible à l'eau. Toutefois, ce procédé ne permet de réaliser que des capsules de grandes tailles (>10 microns); il faut agiter très fortement pendant toute la condensation, parce que l'émulsion n'est pas stable, et ceci explique aussi la forte taille des particules obtenues.

On a donc cherché dans un premier temps à stabiliser l'émulsion. Différents polymères polyélectrolytes de type anionique ont été proposés, grâce auxquels on peut, de plus, contrôler la vitesse de réticulation des résines formant la coquille. Le brevet allemand DE 21 35721 du 16.07.1971 propose l'utilisation de polymères solubles dans l'eau tels que les copolymères styrène-anhydride maléique, les alcools polyvinyliques ou la méthylcellulose comme stabilisants de l'émulsion. Quant au polymère formant la coquille, c'est une résine aminoplaste soluble dans le liquide hydrophobe. Le brevet US 4 001 140 décrit l''utilisation de polymères contenant des groupes carboxyliques tels que des copolymères éthylène-anhydride maléique, des polyacrylates, des copolymères méthylvinyléther-anhydride maléique pour la stabilisation et des résines aminoplastes solubles dans l'eau pour la formation de la coquille. Le brevet allemand DE 29 40786 décrit l'utilisation de polymères contenant des groupements sulfoniques, le brevet allemand DE 30 37309 revendique l'utilisation de polymères type styrènesulfonique, le brevet GB 80/11461 mentionne des copolymères acrylamide-acide acrylique. Le brevet EP 188 807, (KOEHLER, 1986), utilise un procédé un peu différent : on mélange une résine mélamine-formol cationique avec un copolymère hydrosoluble sous forte agitation; il se forme un précipité fin d'environ 1 micron, essentiel au procédé décrit ; après introduction du liquide hydrophobe, il se forme une émulsion stable et on peut ensuite, sous faible agitation, fabriquer une coquille par réticulation d'une deuxième résine mélamine-formol, éthérifiée cette fois. A noter que l'auteur dit qu'on retrouve dans la suspension finale le précipité de résine mélamine cationique à côté de ces particules, le polymère restant largement inchangé.

L'utilisation de tels copolymères polyélectrolytes entraîne toutefois une augmentation de la viscosité notable de l'émulsion. En effet, les copolymères les plus stabilisants de l'émulsion sont, pour une même famille, ceux dont les masses moléculaires sont les plus élevées : il faut trouver un compromis entre la viscosité de l'émulsion et sa stabilité, donc au détriment de l'optimisation de la répartition granulométrique. Le brevet français FR 2 093 646 revendique l'utilisation de tensioactifs réactifs pour la stabilisation de l'émulsion. Ces tensioactifs, qui sont des résines mélamines-formol modifiées contenant des groupements hydrophiles et hydrophobes, sont précipités à la surface de l'émulsion par réticulation, et la coquille est ensuite réalisée par réticulation à la surface des gouttelettes d'une résine aminoplaste non tensioactive, par exemple une résine mélamine-formol éthérifiée. Le brevet français FR 2 479 835 décrit l'utilisation conjointe de polymères hydrosolubles non stabilisants de l'émulsion et de condensats mélamine-formol éthérifiés qui réagissent sur ce polymère pour stabiliser l'émulsion. Dans ce brevet, on joue sur la variation de température autour du point hydrophobe, c'est-à-dire la température au-dessus de laquelle une solution de résine à 5% se trouble (ce point hydrophobe est analogue au point de trouble des tensioactifs non ioniques). On voit que les propriétés tensioactives de la résine mélamine sont importantes pour le procédé ; au cours de la polymérisation de la résine, celles ci peuvent évoluer et donner lieu à des incidents de déstabilisation. Le brevet DE 37 09586 de la société Koehler utilise comme colloïde protecteur un précipité très fin d'une résine mélamine cationique, obtenu par effet d'augmentation de pH par action d'une base de Bronstedt sur une solution acide de ce précondensat, sous très forte agitation. L'émulsion obtenue est stable, et on peut ensuite former la coquille de la microcapsule comme dans le brevet EP 188 807 (également de Koehler). A noter qu'optionnellement, on peut rajouter un copolymère hydrosoluble après la formation de l'émulsion.

Dans le brevet DE 37 43427 (Koehler), la résine mélamine cationique est précipitée par une résine mélamine sulfonée; le précipité est si fin qu'il ne peut être ni filtré, ni centrifugé. A noter que la stabilité de la solution de la résine cationique est faible, et que la taille des microcapsules dépend du temps écoulé entre la mise en dispersion de la résine cationique et sa précipitation.

Les applications des microcapsules sont nombreuses, par exemple encapsulation de parfums, d'adhésifs, de durcisseurs pour des adhésifs réticulables, y compris la fabrication de microcapsules d'air destinés à améliorer l'opacité du papier (DE 2 019 765, The Champion Paper Company Ltd
Une des premières applications industrielles de grand tonnage a été la fabrication de microcapsules d'encres pour la confection de papier autocopiant sans carbone. Un tel système de papier est décrit dans le brevet US 2 730 456. Dans sa forme la plus simple, il comprend deux feuilles de papier, la première (dite CB, pour Coated Back) étant imprégnée sur sa face inférieure de microcapsules contenant une solution incolore d'un produit susceptible de se colorer,la seconde (dite CF, pour Coated Front) étant recouverte sur sa partie supérieure d'un produit réactif révélateur de la couleur. Le révélateur peut être une argile acide, une résine phénolique ou certains sels organiques. Une pression exercée par l'écriture ou l'impression casse les microcapsules: le produit chromogénique est libéré et transféré sur la feuille inférieure où il donne une coloration par réaction chimique avec le coréactant. Les systèmes multicopies comprennent des feuilles intermédiaires qui sont revêtues des deux côtés (CF et CB).

Les microcapsules pour la fabrication de papier autocopiant sensible à la pression doivent avoir certaines qualités pour participer à un système fiable. Elles doivent avoir une certaine résistance à l'écrasement et une bonne imperméabilité pour ne pas qu'une coloration se développe spontanément lors du séchage à la fabrication de la feuille de papier contenant les microcapsules, ni lors de leur stockage et de leur manipulation. Une bonne répartition granulométrique des microcapsules est également nécessaire pour obtenir des suspensions à teneur élevée en microcapsules favorable à l'augmentation de la vitesse des machines à coucher les microcapsules, et d'une façon générale à la bonne qualité des papiers.

Les procédés de l'art antérieur font intervenir des copolymères hydrosolubles qui ont le désavantage de rendre visqueuses les émulsions à partir desquelles on produit les microcapsules. En outre, la partie de ces polymères qui n'intervient pas dans la formation des capsules elles-mêmes se retrouve plus ou moins adsorbée autour des coquilles qu'elle rend adhérentes; elle fonctionne certes comme un liant de couche, mais il est bien plus avantageux de lier les microcapsules à l'aide d'un liant indépendant du procédé et de conserver le choix du produit, de son prix et de ses qualités. On a surtout le choix du moment où l'on rend ces capsules liantes; de cette façon, on peut aussi obtenir des capsules à l'état sec, par simple passage sur une surface absorbante (par exemple une toile filtrante ou sur du papier) suivi d'un séchage à l'air chaud. Ces procédés ont également l'inconvénient de fournir des capsules dont la granulométrie dépend, durant la phase émulsion, du temps écoulé entre la dissolution et la précipitation des résines, notamment avec les résines mélamines cationiques. La présente invention a pour but de remédier à ces inconvénients.

L'objet de l'invention est un nouveau procédé d'encapsulation de substances finement dispersées dans un liquide hydrophobe, procédé qui se caractérise par la mise en dispersion de ce liquide hydrophobe sous forte agitation, à l'aide d'un agent de stabilisation constitué par une poudre minérale insoluble. "La stabilisatoin des suspensions par les poudres est un phénomène decouvert par Pickering (voir CA,2-1908, p.750), parfois utilisé pour la stabilisation de suspension dans des liquides hydrophiles particuliers (solutions salines, solvants organiques), (voir par exemple JP-A-6000824-Pola Kasei Kogyo)." L'émulsion obtenue est suffisamment stable pour être maintenue telle quelle sous faible agitation pendant plusieurs heures. On ajoute ensuite, sous faible agitation, une solution aqueuse d'un aminoplaste précondensé soluble dans l'eau, dans des conditions de pH acide permettant la réticulation de ce précondensat à la surface de l'émulsion : on réalise ainsi la coquille des microcapsules.

Comme substance minérale insoluble, on peut utiliser un sel dont la solubilité est inférieure à 0,2 gramme par litre, comme par exemple le fluorure de calcium, le fluorure de strontium, le fluorure de magnésium, le sulfate de baryum, les phosphates de calcium ou de baryum ou de magnésium. On peut aussi utiliser des oxydes ou des hydroxydes métalliques, comme l'alumine hydratée ou calcinée, l'oxyde de titane. Pour que ces substances minérales confèrent une stabilité suffisante aux émulsions huile dans eau, il est nécessaire que leur granulométrie soit fine; une granulométrie moyenne de l'ordre du micron permet d'obtenir une émulsion stable de type huile dans eau, avec une granulométrie comprise entre un micron et quelques dizaines de microns. Il n'est cependant pas possible d'assigner à la granulométrie de la substance minérale un diamètre moyen maximum au-delà duquel l'émulsion n'est plus stable. En effet, la courbe de répartition granulométrique d'une poudre est généralement étalée, si bien qu'un produit ayant une granulométrie moyenne de plusieurs dizaines de microns contiendra toujours un certain pourcentage de particules assez fines pour stabiliser une émulsion. Il sera donc possible d'obtenir une émulsion stable avec des poudres relativement grossières, en augmentant la quantité de poudre minérale. Cela a toutefois le gros désavantage d'augmenter démesurément la viscosité du système. En pratique, on se limitera à des poudres minérales d'un diamètre moyen au plus égal à 10 microns. Toutes les poudres minérales fines ne conviennent pas pour autant. On reconnaît les poudres minérales qui auront une bonne probabilité de fonctionner dans l'invention comme étant celles qui répondent positivement à un test d'efficacité. On préconise à ce titre un essai qualitatif de mise en émulsion, qui consiste à introduire dans un récipient muni d'une agitation puissante de type rotor/stator 50 parties d'eau, puis de 0,5 à 10 parties de la poudre minérale à tester et 25 parties d'un solvant aromatique. On agite fortement. Il se forme une émulsion qui, abandonnée au repos, ne doit pas coalescer en moins d'une heure, une simple floculation ou une décantation ne résistant pas à une agitation légère n'étant pas prises en compte.

Le taux d'utilisation d'une poudre minérale reconnue apte à stabiliser une émulsion de liquide hydrophobe peut varier d'un produit à un autre en fonction de sa nature chimique et de sa granulométrie, généralement de 0,3 à 25% par rapport au poids total (eau plus huile hydrophobe) de liquide. L'homme de l'art saura, à l'aide du test d'efficacité décrit plus haut, définir si un produit minéral donné de granulométrie de l'ordre du micron, convient ou non, et à quel taux il doit l'utiliser.

Tout liquide immiscible et inerte à l'eau peut convenir pour l'invention. Dans l'application aux papiers copiants, ce liquide doit en outre être un bon solvant des substances chromogènes utilisées. Les huiles les plus couramment utilisées sont les terphényles partiellement hydrogénés, les chloroparaffines, les bisphényl-alkyles, les alkyl-naphtalènes, les dérivés de diarylméthane, les polyalkylbenzènes et notamment le dibenzyltoluène, les alcanes, les cycloalcanes, les esters comme les phtalates, les adipates, etc....

Comme substances dissoutes ou en fine dispersion dans les huiles hydrophobes, on peut citer les substances chromogènes comme les dérivés lactones (par exemple le violet lactone), les dérivés de fluorane, de phtalide, de diphénylamine, de spiropyrane, d'auramine, de phénothiazine. On peut aussi dissoudre des substances réactives vis-à-vis de ces composés chromogènes, par exemple des résines phénoliques novolaques modifiées ou non par du zinc, ou encore les alkyl-salicylates de zinc.

Les résines utiles pour l'invention et qui formeront la coquille de la microcapsule en se réticulant doivent présenter certaines caractéristiques. Elles doivent être solubles dans l'eau, même à des concentrations faibles ; elles doivent résister à la gélification dans l'eau et se polymériser avec une vitesse suffisamment lente pour que, lors de la réticulation, le condensat puisse migrer à l'interface pour former la coquille sans qu'il y ait ni réticulation en masse totale ou même partielle, ni floculation. Des résines qui présentent des caractéristiques souhaitables à ces égards sont les résines mélamine-formol éthérifiées avec du méthanol. On les obtient par réaction de la mélamine avec du formol suivie d'une éthérification partielle des groupements méthylols formés par le méthanol en excès. Le degré d'éthérification désiré est réglé par le rapport entre la quantité de méthanol introduit lors de l'éthérification et la quantité d'eau contenue dans le milieu, la réaction étant équilibrée. De telles résines ont, d'après les analyses, un rapport molaire formaldéhyde / mélamine compris entre 2,5 et 6 (rapport des fonctions méthylols éthérifiés ou non par mole de mélamine et un taux d'éthérification (rapport des fonctions méthylols éthérifiés sur l'ensemble des fonctions méthylols éthérifiés ou non) compris entre 0,3 et 1. La réactivité des résines mélamine / formaldéhyde éthérifiée peut être modifiée, soit en ajoutant du formaldéhyde, soit en mélangeant plusieurs résines, soit encore en ajoutant des résines aminoplastes comme des résines mélamines-formol, des résines urée-formaldéhyde éthérifiées ou non, ou des résines mélamine-formaldéhyde modifiées par d'autres monomères susceptibles de contribuer à la formation d'une résine aminoplaste, comme la thiourée, l'acétamide, l'uréthane, les acides sulfoniques amides, la guanidine,la cyanamide et la dicyanamide, la guanamine, etc..., monomères bien connus de l'homme de l'art et que l'on trouve décrits, par exemple dans le livre de B. Meyer : Urea-Formaldehyde Resins (1979 Addison-Wesley Publishing Company, p. 80).

Pour obtenir les capsules de liquides hydrophobes selon l'invention, on opère de la façon décrite ci-après. On devra disposer d'un moyen d'agitation assez intense. Le matériel de dispersion utilisé doit permettre de créer une turbulence maximale, telle que le nombre de Reynolds soit supérieur à 10 000. En laboratoire, on opère en discontinu ; à l'échelle industrielle, on utilise des appareils de dispersions en continu, tels que des moulins colloïdaux à système rotor/stator. On met en dispersion dans l'eau, sous faible agitation, le composé minéral sélectionné dans des proportions comprises entre 0,3 et 25 % par rapport au poids total de liquide mis en jeu (phase aqueuse + huile hydrophobe). Si l'on fabrique in situ ce composé, il peut être avantageux d'opérer la précipitation sous forte agitation. Ensuite, toujours sous forte agitation, on porte cette suspension minérale dans l'eau et on introduit l'huile ou la solution hydrophobe à encapsuler. On obtient une émulsion de gouttelettes d'huile dont le diamètre est compris entre 2 et quelques dizaines de microns, et plutôt entre 3 et 10 microns. Cette opération est très rapide. L'émulsion obtenue est suffisamment stable pour pouvoir se maintenir sans coalescence ni agglomération pendant plusieurs heures sous faible agitation. On introduit alors une solution de résine mélamine éthérifiée, sous faible agitation, on ramène le pH entre 3 et 6, préférentiellement entre 4 et 5, par addition d'un acide minéral ou organique, l'acide formique dilué étant particulièrement convenable à cet effet. On porte le système à une température comprise entre 30 et 70°C, et de préférence entre 45 et 60°C, pendant un temps déterminé qui dépend bien évidemment des conditions de pH et de température, le temps de formation de la microcapsule étant généralement compris entre 1 et 6 heures, et plutôt entre 2 et 4 heures. Il est nécessaire que la vitesse de réaction soit assez lente pour que la résine qui se polymérise puisse migrer à la surface des particules de l'émulsion et ne pas floculer dans la phase aqueuse. Lorsque la réaction est suffisamment complète et que la paroi des microcapsules a atteint la dureté désirée, il est préférable de ramener le pH au voisinage de la neutralité par addition d'une base comme un hydroxyde alcalin ou l'ammoniaque.

Le rapport pondéral entre la phase huileuse et la partie solide de la résine mélamine servant à faire la coquille de la microcapsule est généralement compris entre 2:1 et 20:1, et mieux entre 5:1 et 10:1. Le rapport pondéral entre la phase hydrophobe et la phase aqueuse n'est pas primordial.

Le procédé selon l'invention fournit des suspensions dont la teneur en microcapsules varie de 10 à 60 %, et plus couramment de 30 à 50% . Son gros avantage réside dans l'utilisation de solutions ou suspensions intermédiaires dont les durées de vie sont suffisamment grandes pour ne pas créer de contrainte dans le processus industriel et dont les délais d'utilisation sont sans influence très sensible sur la granulométrie finale des microcapsules.

Les exemples suivants permettent d'illustrer plus en détail l'invention.

### Exemple 1

Dans 50 parties d'eau, on introduit sous faible agitation 1 partie d'Alumin Oxyd C, une alumine pyrogénée de la société Degussa, qui passe le test d'efficacité, et dont les caractéristiques sont les suivantes:
Granulométrie : d₅₀ = 10 nanomètres (50% des particules ont une granulométrie inférieure à 10 nanomètres);
diamètre moyen des particules = 20 nanomètres.
Point isoélectrique : pH9.
Teneur en Al2O3 : 99,6% minimum.
Refus au tamis de 45 microns : inférieur à 0,05% .

La suspension est ramenée à pH 7-8 par addition d'une solution de soude à 10% . On introduit sous forte agitation, à l'aide d'un appareil de dispersion rotor/stator de grande puissance, 25 parties d'une solution de dibenzyltoluène contenant 0,5 partie de violet lactone et 0,15 partie de leucodérivé N-benzoylé du bleu de méthylène. Après formation de l'émulsion, on introduit sous la faible agitation d'un agitateur magnétique (industriellement on transposera à un agitateur muni d'une ancre ou d'une hélice) 5 parties de résine R4291, une résine mélamine éthérifiée de la société CECA, dont les caractéristiques sont:
Extrait sec : 59-62% ;
Viscosité : 0,1 à 0,18 pascals-secondes;
Tolérance à l'eau : infinie.

On amène le pH de la suspension à 4,2 par addition d'une solution d'acide formique à 20% . On porte l'émulsion, toujours sous agitation modérée, à une température de 55°C, et on maintient cette température pendant deux heures. On constate que la formation des capsules est terminée lorqu'en déposant une goutte de la suspension sur une feuille de papier absorbant, la suspension ne colore plus le papier. On ramène alors le pH à 9 par addition d'une solution aqueuse d'ammoniaque. On obtient ainsi une suspension de microcapsules dont la granulométrie moyenne est d'environ 8 microns. On n'observe pas d'agglomération de microcapsules.

### Exemple 2

On opère comme dans l'exemple 1, mais on n'introduit que 0,5 partie d'alumine pyrogénée. On obtient une suspension de microcapsules dont la granulométrie moyenne est de 20 microns.

### Exemple 3

On opère comme dans l'exemple 1, mais avec 1,5 partie d'alumine pyrogénée. On obtient une suspension de microcapsules dont la granulométrie est d'environ 6 microns.

### Exemple 4

On opère comme dans l'exemple 1, mais on ne neutralise pas la suspension aqueuse d'alumine. On obtient une suspension de microcapsules dont la granulométrie moyenne est de 12 à 15 microns.

### Exemple 5

On opère comme dans l'exemple 1, mais on utilise de l'alumine hydratée Martinal 107 (de la société Martinswerk), qui titre 99,6% minimum en Al(OH)₃, et dont le diamètre moyen des particules est de 0,5 micron. Si l'on utilise 1 partie de cette alumine, on obtient une dispersion de microcapsules avec un diamètre moyen de 20 microns. Si l'on utilise 5 parties de cette alumine, on obtient une dispersion de microcapsules avec un diamètre moyen de 5 microns.

### Exemple 6

On tente de répéter l'exemple 1, mais en utilisant une alumine hydratée dont le diamètre moyen est beaucoup plus fort (⌀ ≈ 10 microns), qui ne passe pas le test d'efficacité. Même avec 15 parties de cette alumine, on n'aboutit pas à une émulsion stable.

### Exemple 7

On opère comme dans l'exemple 1, mais on utilise une alumine hydratée de granulométrie moyenne (alumine SH 80 G de la société Aluminium Péchiney, 8 microns). Avec 2 parties de cette alumine, on obtient des microcapsules de 40 microns. Avec 10 parties de cette alumine, on obtient des microcapsules de 8-15 microns.

### Exemple 8

On opère comme dans l'exemple 1, mais on utilise un oxyde de titane pyrogéné, le Titanium Dioxide P 25 de la société Degussa, dont les caractéristiques sont les suivantes:
Granulométrie moyenne : 30 nanomètres;
Teneur en TiO₂ : 99,5% minimum;
Point isoélectrique à pH 6,6.

La dispersion aqueuse de cet oxyde est à pH 8, et il n'est pas nécessaire de réajuster le pH à la soude. On obtient une dispersion de microcapsules dont le diamètre moyen est compris entre 4 et 10 microns.

### Exemple 9

Dans 50 parties d'eau, on dissout 2,5 parties d'hydroxyde de baryum Ba(OH)₂, 8H₂O. On ajoute sous faible agitation 7,8 parties environ d'une solution d'acide sulfurique à 11%. On obtient une suspension de sulfate de baryum précipité dont le pH est d'environ 7. On procède ensuite comme dans l'exemple 1, et on obtient des microcapsules dont le diamètre moyen est d'environ 15 microns.

## Revendications

1. Procédé de microencapsulation d'huiles hydrophobes, consistant à former une émulsion dans l'eau de ces huiles sous forte agitation, à additionner à cette émulsion une résine aminoplaste soluble dans l'eau pour former la coquille des microcapsules, puis à réticuler la paroi des microcapsules caractérisée en ce que l'on forme l'émulsion dans une suspension dans l'eau d'une poudre minérale de fine granulométrie, à l'exclusion de tout agent émulsionnant organique ou de calloïde protecteur.

2. Procédé selon la revendication 1 dans lequel la poudre minérale est un oxyde ou hydroxyde insoluble.

3. Procédé selon la revendication 1 dans lequel la poudre minérale est de l'oxyde d'aluminium.

4. Procédé selon la revendication 1 dans lequel la poudre minérale est de l'alumine hydratée.

5. Procédé selon la revendication 1 dans lequel la poudre minérale est un sel dont la solubilité est inférieure à 0,2 gramme par litre.

6. Procédé selon l'une quelconque des revendications 1 à 5, caractérisé en ce que la dispersion de l'huile hydrophobe dans l'eau est utilisée pour la suite du procédé après conservation de quelques minutes à quelques heures sous agitation modérée.

7. Procédé selon l'une quelconque des revendications 1 à 6, caractérisé en ce que la résine aminoplaste soluble dans l'eau est une résine mélamine-formol partiellement éthérifiée par du méthanol.

8. Procédé de microencapsulation d'huiles hydrophobes selon l'une quelconque des revendications 1 à 7, caractérisé en ce que lesdites huiles hydrophobes contiennent à l'état dissous des composés chromogènes ou des réactifs de ces composés.

9. Microcapsules fabriquées par le procédé selon l'une quelconque des revendications 1 à 8.

10. Utilisation des microcapsules fabriquées selon la revendication 9 dans les systemes de papier impression basés sur une réaction colorée.

## Patentansprüche

1. Verfahren zur Mikroverkapslung von hydrophoben Ölen, bestehend aus der Bildung einer Emulsion dieser Öle in Wasser durch starkes Rühren, Zugabe eines Aminoplastharzes zu dieser Emulsion, welches löslich in Wasser ist, um die Hülle der Mikrokapseln zu bilden, gefolgt von einer Vernetzung der Wände der Mikrokapseln, dadurch gekennzeichnet, daß man eine Emulsion in einer Suspension in Wasser durch ein Mineralpulver von feiner Körnung bildet, unter Ausschluß jeglicher Emulgierungsmittel oder eines Schutzkolloids.

2. Verfahren nach Anspruch 1, dadurch gekennzeichnet, daß das Mineralpulver ein unlösliches Oxid oder Hydroxid ist.

3. Verfahren nach Anspruch 1, dadurch gekennzeichnet, daß das Mineralpulver Aluminiumoxid ist.

4. Verfahren nach Anspruch 1, dadurch gekennzeichnet, daß das Mineralpulver wasserenthaltende Tonerde ist.

5. Verfahren nach Anspruch 1, dadurch gekennzeichnet, daß das Mineralpulver ein Salz ist, dessen Löslichkeit weniger als 0,2 g/l beträgt.

6. Verfahren nach einem der Ansprüche 1 bis 5, dadurch gekennzeichnet, daß die Dispersion des hydrophoben Öls in Wasser eingesetzt wird und im Fortgang des Prozesses für einige Minuten bis einige Stunden einem leichten Rühren ausgesetzt wird.

7. Verfahren nach einem der Ansprüche 1 bis 6, dadurch gekennzeichnet, daß das in Wasser lösliche Aminoplastharz ein Melaminformaminharz ist, das zum Teil mit Methanol verethert ist.

8. Verfahren zur Mikroverkapslung von hydrophoben Ölen gemäß einem der Ansprüche 1 bis 7, dadurch gekennzeichnet, daß besagte hydrophobe Öle in gelöstem Zustand farbbildende Verbindungen oder Ausgangsstoffe für diese Verbindungen enthalten.

9. Mikrokapseln hergestellt nach dem Verfahren gemäß einem der Ansprüche 1 bis 8.

10. Verwendung der hergestellten Mikrokapseln gemäß An spruch 9 in Druckpapiersystemen, die auf einer Farbreaktion basieren.

## Claims

1. Process for microencapsulation of hydrophobic oils, consisting in forming an emulsion of these oils in water with energetic stirring, in adding a water-soluble aminoplastic resin to this emulsion to form the shell of the microcapsules and then in crosslinking the wall of the microcapsules, characterized in that the emulsion is formed in a suspension of an inorganic powder of fine particle size in water, with the exclusion of any organic emulsifying agent or protective colloid.

2. Process according to Claim 1, in which the inorganic powder is an insoluble oxide or hydroxide.

3. Process according to Claim 1, in which the inorganic powder is aluminium oxide.

4. Process according to Claim 1, in which the inorganic powder is hydrated alumina.

5. Process according to Claim 1, in which the inorganic powder is a salt whose solubility is lower than 0.2 grams per litre.

6. Process according to any one of Claims 1 to 5, characterized in that the dispersion of the hydrophobic oil in water is employed for the continuation of the process after storage for a few minutes to a few hours with moderate stirring.

7. Process according to any one of Claims 1 to 6, characterized in that the water-soluble aminoplastic resin is a melamine-formaldehyde resin partially etherified with methanol.

8. Process for microencapsulation of hydrophobic oils according to any one of Claims 1 to 7, characterized in that the said hydrophobic oils contain chromogenic compounds in the dissolved state or reactants of these compounds.

9. Microcapsules manufactured by the process according to any one of Claims 1 to 8.

10. The use of the microcapsules manufactured according to Claim 9 in printing-paper systems based on a colour reaction.
